# EUROPEAN PATENT SPECIFICATION

(11) **EP 2 512 845 B1**
(45) Date of publication and mention of the grant of the patent: **02.03.2016**
(21) Application number: 10807483.2
(22) Date of filing: 16.12.2010
(51) Int. Cl.: B60G 7/00, B23K 26/00

(54) **BUTT JOINTED CLOSED SECTION HOLLOW STRUCTURAL ELEMENT**
HOHLES BAUELEMENT MIT GESCHLOSSENEM QUERSCHNITT MIT STUMPFSCHWEISSVERBINDUNG
ÉLÉMENT STRUCTURAL CREUX DE SECTION FERMÉE SOUDÉ PAR RAPPROCHEMENT

(30) Priority: 17.12.2009 US 287662 P
(43) Date of publication of application: 24.10.2012
(73) Proprietor: MULTIMATIC INC., Markham, Ontario L3R 5E5 (CA)
(72) Inventor: GRUBER, Rudolf, Uxbridge Ontario L9P 1R4 (CA)
(74) Representative: Messulam, Alec Moses
(86) International application number: PCT/IB2010/055898
(87) International publication number: WO 2011/073949

(56) References cited:
- EP-A1- 0 326 994
- EP-A2- 1 557 301
- DE-C1- 10 140 288
- GB-A- 565 741
- JP-A- 61 103 687
- US-A1- 2003 205 879

## Description

### Field of the invention

The present invention relates to a method of forming structural elements from sheet metal and to structural elements formed by the method.

### Background of the invention

It is advantageous to create a vehicular structural member such as a motor compartment rail, suspension control arm or suspension sub-frame beam from a closed section hollow element that utilizes a conventional clamshell configuration but eliminates the overlapped joint of the prior art. It has been proven that for large volume applications such as those dictated by the automotive industry. Sheet metal press forming is the most cost-effective method of manufacturing structural components. Almost every vehicle currently produced utilizes a body structure and selected subframes constructed almost entirely from either aluminum or steel stampings manufactured using press forming techniques. Wherever closed section hollow elements are required they are generally constructed from two press formed open section sheet metal components, creating a clamshell configuration using either an overlapping section to facilitate a suitable fillet type weld joint or a outstanding flange to provide a double material spot weld joint. The primary aim of the present disclosure is to eliminate the redundant material associated with overlapping or flange type joints in clamshell closed section hollow elements.

The most efficient type of weld joint is a butt arrangement where the two components being structurally joined meet along a tangent interface at their open edges so that there is no overlapping of material. This butt joint can then be welded using MIG, TIC, Arc, Laser or similar means creating a continuous structural attachment of the two components. The quality of this welded butt joint is extremely sensitive to the gap between to the two components and the differential thickness of the materials of the two components. The differential thickness can be controlled by correct specification during the design process. The gap between the two components is dependent on manufacturing process capability.

When the two components are constructed from stamped sheet metal using press formed techniques the open edges cannot be developed to interface with a zero gap due to limitations in the process. It is for this reason that press formed clamshell configurations use either an overlapping section to facilitate a suitable fillet type weld joint or an outstanding flange to provide a double material spot weld joint.

### Summary of the invention

In accordance with the present invention, there is provided a method of forming a closed section hollow structural element comprising: press forming an upper sheet metal component with a generally open section and configured with two primarily parallel downstanding interface flanges; press forming a lower sheet metal component with a generally open section and configured with two primarily parallel upstanding interface flanges; and butt welding the interface flanges of the upper and lower sheet metal components to one another to form a continuous hollow structural element of variable cross section,
characterized in that prior to welding, the press interface flanges of the upper and lower sheet metal components are complementarily trimmed using five-axes laser cutting while the upper and lower sheet metal components are rigidly held in dimensional compliance by a fixture.

The trimmed edges of the upper and lower components may suitably be welded to one another by a continuous laser butt weld.

In some embodiments, the method further comprises, subsequent to the complementary trimming of the interface flanges, moving the upper sheet metal component and the lower sheet metal component into contact with each other while continuing to rigidly hold them in the fixture, and structurally attaching the components along the interface by a butt weld while rigidly holding the components in the fixture.

The most effective process for continuous structural attachment of two metal components is laser welding, as laser welding imparts significantly less heat than other welding techniques. Laser welding also generally does not require filler material and has significantly faster application speed. However, laser welding requires even tighter tolerances on butt joint gaps than other welding techniques and so is generally only applied to overlapping material configurations.

A closed section hollow element constructed from two press formed open section sheet metal components configured as a clamshell with structural attachment created by laser welding of a butt joint at the interface between the components would offer a significant weight and cost advantage over the configurations of the prior art.

In an embodiment of the present disclosure, a closed section hollow structural element is constructed from an upper sheet metal stamped component with a generally open section manufactured using press forming techniques and configured with two primarily parallel downstanding interface flanges and a lower sheet metal stamped component with a generally open section manufactured using press forming techniques and configured with two primarily parallel upstanding interface flanges. After press forming the upper sheet metal stamped component and lower sheet metal stamped component are rigidly held in dimensional compliance by a purpose built fixture and the upstanding and downstanding interface flanges are complementarily trimmed using five-axis laser cutting. The fixture facilitates movement of the upper sheet metal stamped component and lower sheet metal stamped component into contact with each other along their entire interface with a zero gap while continuing to rigidly hold the components in dimensional compliance. The upper sheet metal stamped component and lower sheet metal stamped component are then structurally attached along the zero gap interface by a continuous laser butt weld while being rigidly held in the fixture. Because the components are rigidly held in dimensional compliance and the five axes trimming operation is undertaken in the same fixture the zero gap interface is absolutely maintained and a high quality laser welded joint with no redundant material overlap, very little heat effect and high processing speed is achieved. The result is a continuous hollow structural element of a variable cross section that has a high level of dimensional integrity because once the two sheet metal stamped components are structurally attached they hold each other in dimensional compliance once removed from the fixture thereby eliminating the effects of material springbuck and forming inaccuracies in the individual components.

In this manner, a highly efficient closed section hollow element is created that utilizes less material than structurally equivalent overlapped or flanged clamshell configurations thereby achieving a lower mass and lower cost solution. Additionally the closed section hollow element of the present disclosure can be constructed with cost effective press forming tools because highly accurate sheet metal stamped components are no longer required as the fixture provides the required dimensional tolerances during trimming and welding. An additional advantage of the closed section hollow element of the present disclosure is that its cross section area can be greatly varied along its length with far higher ratios than conventional closed section, nonoverlapping joint arrangements produced by roll forming, blow forming or hydroforming.

### Brief description of the drawings

The invention will now be described further, by way of example, with reference to the accompanying drawings, in which : FIG. 1 is a perspective view of the inventive closed section hollow structural element; FIG. 2 is an expanded perspective view of the inventive closed section hollow structural element; FIG. 3 is a perspective view of the components of the inventive closed section hollow structural element partially installed in the purpose built fixture; FIG. 4 is a perspective view of the purpose built fixture with the components of the inventive closed section hollow structural element fully installed and trimmed; FIG. 5 is a perspective view of the purpose built fixture with the components of the inventive closed section hollow structural element fully installed during laser welding; FIG. 6 is a perspective view of an application of the inventive closed section hollow structural element; FIG. 7 is a perspective view of a further application of the inventive closed section hollow structural element; and FIG. 8 is a perspective view of another application of the inventive closed section hollow element.

### Detailed description of the drawings

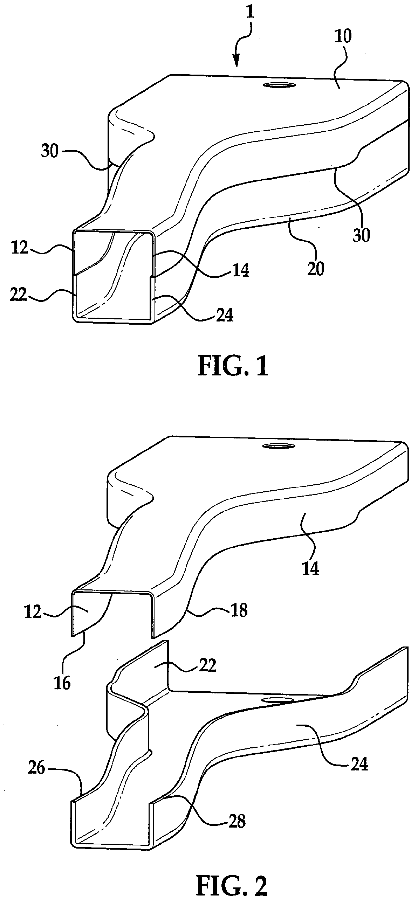

Referring to Figures 1 and 2, a closed section hollow element (1) is substantially constructed from an upper sheet metal stamped component (10) and a lower sheet metal stamped component (20). Both of the sheet metal stamped components are manufactured by press forming a flat sheet of steel, aluminum or other suitable metal or alloy into a required open section shape which is dictated by the final application's structural and packaging requirements. The upper sheet metal stamped component (10) is configured with two primarily parallel downstanding interface flanges (12) (14). As shown in the non-limiting example of Figures 1 and 2, the lower sheet metal stamped component (20) is configured with two primarily parallel upstanding interface flanges (22)(24). The downstanding interface flanges (12)(14) of the upper sheet metal component (10) are five-axes laser trimmed after press forming to create highly accurate interface edges (16) (18). The upstanding interface flanges (22)(24) of the lower sheet metal component (20) are five-axes laser trimmed after press forming to create highly accurate interface edges (26)(28). The interface edges (16)(18)(26)(28) are complementarily trimmed via a five-axes laser during a single operation while the upper sheet metal stamped component (10) and a lower sheet metal stamped component (20) are rigidly held in dimensional compliance by a purpose built fixture. In this manner the interface edges (26)(28) of the upstanding interface flanges (22)(24) and the interface edges (16)(18) of the downstanding interface flanges (12) (14) are configured to tightly match with a zero gap. This zero gap interface (also referred to as "interface") facilitates a high quality laser welded butt joint (30) that structurally attaches the upper sheet metal stamped component (10) and a lower sheet metal stamped component (20) so as to create a continuous hollow structural element (1) of a variable cross section.

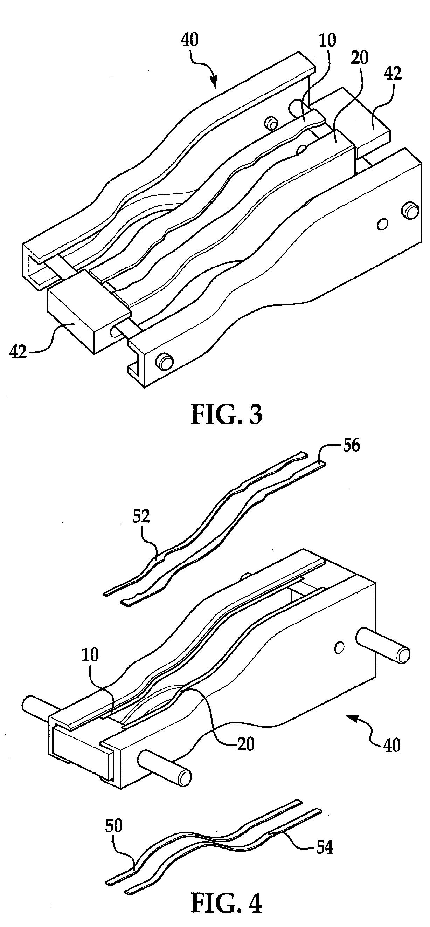

Figure 3 illustrates a non-limiting example of a purpose built fixture (40) configured to rigidly hold the upper sheet metal stamped component (10) and lower sheet metal stamped component (20) with the sheet metal stamped components shown prior to installation in the purpose built fixture (40) held at a predetermined distance by the spacer blocks (42).
Figure 4 illustrates the purpose built fixture (40) with the upper sheet metal stamped component (10) and lower sheet metal stamped component (20) fully installed in the fixture (40) and the interface edges (16)(18)(26)(28) having been complementarily trimmed via a five-axes laser. The scrap material (50) (52) that contains inaccurate formed edges (54) (56) is shown detached from the interface flanges (12) (14) (22) (24).

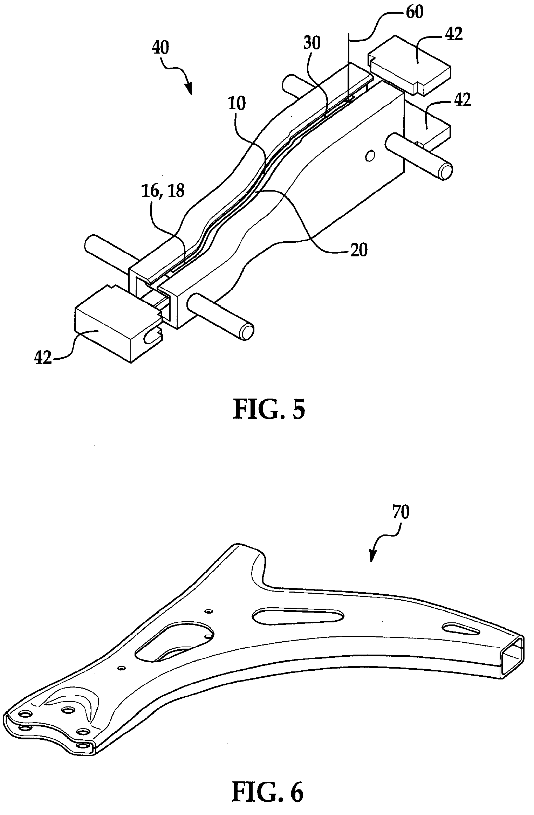

Figure 5 illustrates the purpose built fixture (40) with the spacer blocks retracted (42) and the upper sheet metal stamped component (10) and lower sheet metal stamped component (20) brought into contact with each other along their previously laser trimmed interface edges (16)(18)(26)(28) creating a zero gap condition. A laser beam (60) is illustrated completing a welded butt joint (30) along the entire zero gap interface so as to create a continuous hollow structural element (1) of a variable cross section.
Figure 6 illustrates a non-limiting example of a vehicular suspension arm (70) configured as a closed section hollow element of a variable cross section constructed using the manufacturing technique previously described.

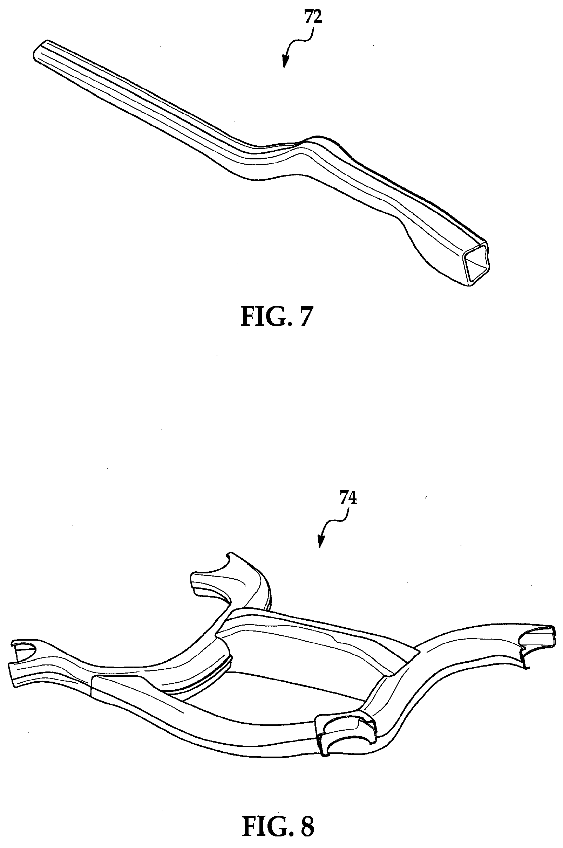

Figure 7 illustrates a non-limiting example of a vehicular motor compartment rail (72) configured as a closed section hollow element of a variable cross section constructed using the manufacturing technique previously described.
Figure 8 illustrates a non-limiting example of a vehicular suspension sub-frame (74) configured from four closed section hollow elements of variable cross section constructed using the manufacturing technique previously described.

## Claims

1. A method of forming a closed section hollow structural element (1) comprising:
press forming an upper sheet metal component (10) with a generally open section and configured with two primarily parallel downstanding interface flanges (12, 14);
press forming a lower sheet metal component (20) with a generally open section and configured with two primarily parallel upstanding interface flanges (22, 24); and
butt welding the interface flanges (12, 14, 22, 24) of the upper and lower sheet metal components (10, 20) to one another to form a continuous hollow structural element of variable cross section,
**characterized in that**
prior to welding, the interface flanges (12, 14, 22, 24) of the upper and lower sheet metal components are complementarily trimmed using five-axes laser cutting while the upper and lower sheet metal components (10, 20) are rigidly held in dimensional compliance by a fixture (40)

2. A method as claimed in claim 1, wherein the trimmed edges (16, 18, 26, 28) of the upper and lower components (10, 20) are welded to one another by a continuous laser butt weld.

3. A method as claimed in claim 1 or 2, which further comprises, subsequent to the complementary trimming of the interface flanges, (12, 14, 22, 24), moving the upper sheet metal component (10) and the lower sheet metal component (20) into contact with each other while continuing to rigidly hold them in the fixture (40), and structurally attaching the components along the interface (12, 14, 22, 24) by a butt weld while rigidly holding the components in the fixture (40).

4. A structural element formed by the method of any one of clams 1 to 3, wherein the structural element is a vehicular suspension arm (70).

5. A structural element formed by the method of any one of claims 1 to 3, wherein the structural element is a vehicular motor compartment rail (72).

6. A structural element formed by the method of any one of claims 1 to 3, wherein the structural element is a beam for a vehicular suspension sub-frame (74).

## Patentansprüche

1. Verfahren zum Formen eines hohlen Bauelements mit geschlossenem Querschnitt (1), umfassend:
Pressformen eines oberen Blechteils (10) mit einem im Allgemeinen offenen Querschnitt und gestaltet mit zwei im Wesentlichen parallel nach unten stehenden Verbindungsflanschen (12, 14); Pressformen eines unteren Blechteils (20) mit einem im Allgemeinen offenen Querschnitt und gestaltet mit zwei im Wesentlichen parallel nach oben stehenden Verbindungsflanschen (22, 24); und
Stumpfschweißen der Verbindungsflansche (12, 14, 22, 24) der oberen und unteren Blechteile (10, 20) aneinander, so dass ein durchgängiges hohles Bauelement mit variablem Querschnitt gebildet wird, **dadurch gekennzeichnet, dass**
vor dem Schweißen die Verbindungsflansche (12, 14, 22, 24) des oberen und unteren Blechteils mittels Fünf-Achsen-Laserschneiden komplementär zugeschnitten werden, während das obere und das untere Blechteil (10, 20) durch eine Haltevorrichtung (40) unter Sicherstellung der Maßhaltigkeit starr gehalten werden.

2. Verfahren nach Anspruch 1, wobei die zugeschnittenen Kanten (16, 18, 26, 28) des oberen und des unteren Blechteils (10, 20) mit einer kontinuierlichen Laserstumpfschweißnaht aneinander geschweißt werden.

3. Verfahren nach Anspruch 1 oder 2, das weiter nach dem komplementären Zuschneiden der Verbindungsflansche (12, 14, 22, 24) das Bewegen des oberen Blechteils (10) und des unteren Blechteils (20), so dass sich diese berühren, und gleichzeitig das stabile Halten dieser Teile in der Halterung (40) und das bauliche Verbinden der Teile entlang des Flansches (12, 14, 22, 24) mit einer Stumpfschweißnaht, während die Teile fest in der Halterung (40) gehalten werden, umfasst.

4. Bauelement, gebildet nach dem Verfahren nach einem der Ansprüche 1 bis 3, wobei das Bauteil ein Querlenker eines Fahrzeugs (70) ist.

5. Bauelement, gebildet nach dem Verfahren nach einem der Ansprüche 1 bis 3, wobei das Bauteil ein Motorraumträger eines Fahrzeugs (72) ist.

6. Bauelement, gebildet nach dem Verfahren nach einem der Ansprüche 1 bis 3, wobei das Bauteil ein Träger für den Fahrschemel eines Fahrzeugs (74) ist.

## Revendications

1. Une méthode de formation d'un élément porteur creux à profilé fermé (1) comprenant :
le moulage sous pression d'un composant supérieur en tôle métallique (10) à profilé généralement ouvert, et configuré avec deux brides d'interface tournées vers le bas et principalement parallèles (12, 14) ;
le moulage sous pression d'un composant inférieur en tôle métallique (20) à profilé généralement ouvert, et configuré avec deux brides d'interface tournées vers le haut principalement parallèles (22, 24) ; et
le soudage en bout, l'une contre l'autre, des brides d'interface (12, 14, 22, 24) des composant supérieurs et inférieurs en tôle métallique (10, 20) de façon à former un élément porteur creux continu à section transversale variable, **caractérisé en ce que**
préalablement au soudage, les brides d'interface (12, 14, 22, 24) des composant supérieurs et inférieurs en tôle métallique sont dressés de façon complémentaire par coupage au laser sur cinq axes, les composant supérieurs et inférieurs en tôle métallique (10, 20) étant maintenus de façon rigide, en conformité dimensionnelle, par un dispositif de serrage (40).

2. Une méthode selon la revendication 1, les bords dressés (16, 18, 26, 28) des composant supérieurs et inférieurs (10, 20) étant soudés l'un à l'autre par soudage laser en bout continu.

3. Une méthode selon la revendication 1 ou 2, comprenant en outre, à la suite du dressage complémentaire des brides d'interface (12, 14, 22, 24), le déplacement du composant supérieur en tôle métallique (10) et du composant inférieur en tôle métallique (20) afin de les mettre en contact entre eux, tout en continuant de les maintenir de façon rigide dans le dispositif de serrage (40), et la fixation structurelle des composants le long de l'interface (12, 14, 22, 24) par soudage en bout, tout en maintenant les composants de façon rigide dans le dispositif de serrage (40).

4. Un élément porteur formé selon la méthode d'une quelconque des revendications 1 à 3, l'élément porteur étant un bras de suspension pour véhicule automobile (70).

5. Un élément porteur formé selon la méthode d'une quelconque des revendications 1 à 3, l'élément porteur étant un longeron de compartiment moteur pour véhicule automobile (72).

6. Un élément porteur formé selon la méthode d'une quelconque des revendications 1 à 3, l'élément porteur étant un longeron pour sous-châssis de suspension de véhicule automobile (74).
